# EUROPEAN PATENT APPLICATION

(11) **EP 4 700 087 A1**
(43) Date of publication of application: **25.02.2026**
(21) Application number: 24919134.7
(22) Date of filing: 11.12.2024
(51) Int. Cl.: C08L 53/00

(54) **THERMOPLASTIC FLAME-RETARDANT RESIN COMPOSITION AND MOLDED ARTICLE**

(30) Priority: 04.07.2024 KR 20240087977
(71) Applicant: LG Chem, Ltd., Seoul 07336 (KR)
(72) Inventor: SHIN, Kwang Ho, Seoul 07796 (KR); LIM, Seong Hwan, Seoul 07796 (KR); JUN, Yiseul, Seoul 07796 (KR); SON, Sun Mo, Seoul 07796 (KR)
(74) Representative: Goddar, Heinz J.
(86) International application number: PCT/KR2024/096660
(87) International publication number: WO 2026/010047

(57) **Abstract**

The present invention relates to a thermoplastic flame-retardant resin composition and/or a molded article. According to the present invention, the present invention has an effect of providing a thermoplastic flame-retardant resin composition having excellent post-molding shrinkage prevention ability and processability required in a large-area lightweight molded article having very thin thickness, exhibiting high flame retardancy, and having lightness and a molded article manufactured using the same.

## Description

### [Technical Field]

### [Cross-Reference to Related Application]

This application claims priority to Korean Patent Application No. 10-2024-0087977, filed on July 4, 2024, in the Korean Intellectual Property Office, the disclosure of which is incorporated herein by reference.

The present invention relates to a thermoplastic flame-retardant resin composition and a molded article. More particularly, the present invention relates to a lightweight thermoplastic flame-retardant resin composition having excellent post-molding shrinkage prevention ability and processability and high flame retardancy required in a large-area lightweight molded article having very thin thickness, and a molded article manufactured using the thermoplastic flame-retardant resin composition.

### [Background Art]

Polypropylene resin is a type of general-purpose plastic that is used in various fields such as automobiles, building materials, and electrical components in the form of injection-molded articles, sheets, and blow-molded articles due to excellent processing characteristics, chemical resistance, weather resistance, and high flexibility thereof. Recently, high-gloss grades with excellent surface gloss and wear resistance, heavy-weight grades with improved rigidity and damping characteristics, thermally stable heat-resistant grades, high-strength grades that meet various mechanical property requirements by adding glass fibers and exhibits tensile strength approximately 200-300 % higher and flexural modulus more than 4 times higher than that of general polypropylene resin, high-impact grades that improves impact strength by using RTPO (Reactor-made Thermoplastic Olefin) and synthetic rubber, exhibiting excellent impact strength at low temperatures and excellent fluidity, and long-term weather-resistant grades with excellent weather stability and no discoloration even when left outdoors for a long period of time have been developed. In line with the trend toward complexification and functionalization, various new applications are being attempted.

Originally, polypropylene resin was included in the category of plastics that are prone to combustion, and thus use thereof as a flame retardant was limited. However, as polypropylene resin has become more functionalized and its field of use has expanded, the function thereof as a flame retardant material is also being demanded. To meet these needs, polypropylene flame retardant grades having excellent flame retardancy by adding various organic or inorganic flame retardants have been developed and used.

This flame-retardant polypropylene is mainly used in electrical and electronic components included in TVs, monitors, and air conditioners. Recently, in addition to flame retardancy, these products are required to have properties such as formability, processability, and lightweight. For example, an insulating sheet for energy storage system, which exhibits flame retardancy grade V-0 of UL94, has a very thin thickness of less than 0.3 mm, a large area, excellent post-molding shrinkage prevention ability, high flame retardancy, and processability, and lightweight with a specific gravity of less than 1.

In general, flame retardancy of polypropylene resin tends to be inversely proportional to lightness, so that resin compositions with high flame retardancy tend to have higher specific gravity.

Previously, as the flame-retardant polypropylene resin, a material obtained by mixing a flame retardant, such as a tetrabromobisphenol A compound or a tetrabromobisphenol S compound, with polypropylene was disclosed in Japanese Application Pub. No. hei 6-184372. This flame-retardant polypropylene resin may increase the flame retardant effect by mixing a small amount of flame retardant, but the flame-retardant polypropylene resin is difficult to be formed into large-area, very thin products due to poor processability thereof.

To improve the processability defects described above, Japanese Application Pub. No. hei 9-52988 discloses a method in which a tetrabromobisphenol A compound or a tetrabromobisphenol S compound is added as a flame retardant and chlorinated polyethylene is mixed therewith. However, there is a problem in that the product has a rather low flame retardancy corresponding to UL94 V-2 grade.

In addition, according to Japanese Application Pub. No. 2000-344973 and Japanese Application Pub. No. 2001-220470, a thermoplastic flame-retardant resin composition obtained by adding halogen diphenyl ether compounds such as decabromodiphenyl oxide and octabromodiphenyl oxide, and halogen bisphenol compounds such as hexabromocyclododecane as flame retardants exhibits high flame retardancy (UL94 V-2~V-0), but has problems in mechanical properties, heat resistance, and weather resistance.

### [Disclosure]

### [Technical Problem]

Therefore, the present invention has been made in view of the above problems, and it is one object of the present invention to provide a thermoplastic flame-retardant resin composition having excellent post-molding shrinkage prevention ability and processability required in a large-area lightweight molded article having very thin thickness, exhibiting high flame retardancy, and having lightness.

It is another object of the present invention to provide a molded article manufactured using the thermoplastic flame-retardant resin composition.

The above and other objects can be accomplished by the present invention described below.

### [Technical Solution]

I) In accordance with one aspect of the present invention, provided is a thermoplastic flame-retardant resin composition including resins represented by Chemical Formula 1 below; a resin represented by Chemical Formula 2 below; a post-molding shrinkage inhibitor represented by Chemical Formula 3 below; a halogen-based flame retardant; and a flame retardant aid, wherein the resin represented by Chemical Formula 2 and the resins represented by Chemical Formula 1 are included in a weight ratio of 1:6 to 1:7.4, and the resins represented by Chemical Formula 1 include a first resin in which n is an integer between 1000 and 3000 and a second resin in which n is an integer between 3000 to 6000 in a weight ratio of 1:1 to 1:3.8. 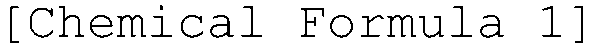 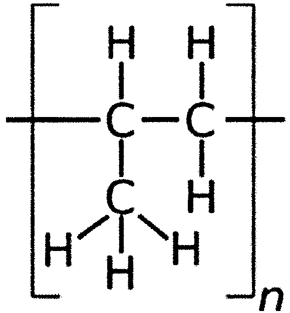 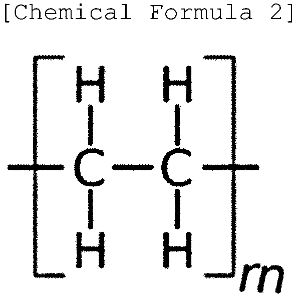 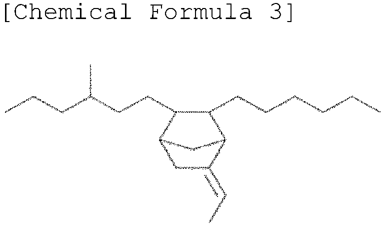 wherein, in Chemical Formulas 1 and 2, n is an integer between 1000 and 6000, and m is an integer between 2000 and 8000; and, in Chemical Formula 3, carbon (C) symbols and carbon-hydrogen bond symbols are omitted.
II) According to I), the first resin may have a melt index of 5 to 50 g/10 min as measured at 230 °C under a load of 2.16 kg in ISO1133 standard.
III) According to I) to II), the second resin may have a melt index of 0.01 to 4 g/10 min as measured at 230 °C under a load of 2.16 kg in ISO1133 standard.
IV) According to I) to III), the resin represented by Chemical Formula 2 and the post-molding shrinkage inhibitor represented by Chemical Formula 3 may be included in a weight ratio of 1:0.5 to 1:1.5.
V) According to I) to IV), the halogen-based flame retardant may be a bromine-based flame retardant.
VI) According to I) to V), the bromine-based flame retardant may include one or more selected from tetrabromobisphenol A, decabromodiphenyloxide, octabromo-1,3,3-trimethyl-1-phenylindane, tetrabromobisphenol A-bis(2,3-dibromopropyl ether), and 2,4,6-tris(2,4,6-tribromophenoxy)-1,3,5-triazine.
VII) According to I) to VI), the flame retardant aid may be an antimony-based compound.
VIII) According to I) to VII), the antimony-based compound may include one or more selected from antimony trioxide, polysiloxane compounds, biotite, muscovite, iron oxide, tungsten oxide, and calcium carbonate.
IX) In accordance with another aspect of the present invention, provided is a thermoplastic flame-retardant resin composition including 19 to 29 % by weight of a first resin represented by Chemical Formula 1 below in which n is an integer between 1000 and 3000, wherein the first resin has a melt index of 5 to 50 g/10 min as measured at 230 °C under a load of 2.16 kg in ISO1133 standard; 40 to 50 % by weight of a second resin represented by Chemical Formula 1 below in which n is an integer between 3000 and 6000, wherein the second resin has a melt index of 0.01 to 4 g/10 min as measured at 230 °C under a load of 2.16 kg in ISO1133 standard; 6 to 14 % by weight of a resin represented by Chemical Formula 2 below in which m is an integer between 2000 and 8000; 6 to 14 % by weight of a post-molding shrinkage inhibitor represented by Chemical Formula 3 below; 6.5 to 11 % by weight of a bromine-based flame retardant; and 1 to 4 % by weight of an antimony-based flame retardant aid,
   wherein the resin represented by Chemical Formula 2 and the resins represented by Chemical Formula 1 are included in a weight ratio of 1:6 to 1:7.4. 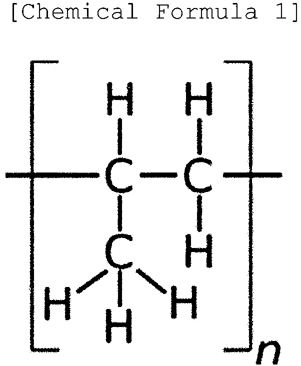 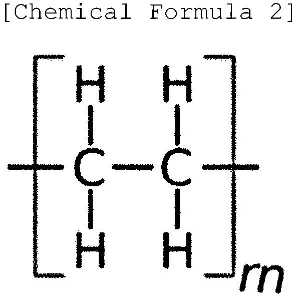 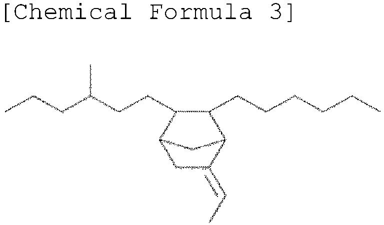
   wherein, in Chemical Formulas 1 and 2, n is an integer between 1000 and 6000, and m is an integer between 2000 and 8000; and, in Chemical Formula 3, carbon (C) symbols and carbon-hydrogen bond symbols are omitted.
X) In accordance with yet another aspect of the present invention, provided is a molded article manufactured using the thermoplastic flame-retardant resin composition described above.
XI) According to X), the molded article may be an energy storage system component or a large-area sheet having a thickness of 0.3 mm or less.

### [Advantageous Effects]

The thermoplastic flame-retardant resin composition according to the present invention has excellent combustion characteristics and exhibits flame retardancy of grade V-0 in the vertical combustion test of UL94. In addition, the thermoplastic flame-retardant resin composition according to the present invention has excellent post-molding shrinkage prevention ability and processability, and thus is suitable for large-area lightweight molded articles having very thin thickness that require such performances.

Therefore, the thermoplastic flame-retardant resin composition and/or molded article according to the present invention can be applied to various industrial fields such as electrical and electronic products and automobile parts that require the thermoplastic flame-retardant resin composition and/or molded article.

### [Description of Drawings]

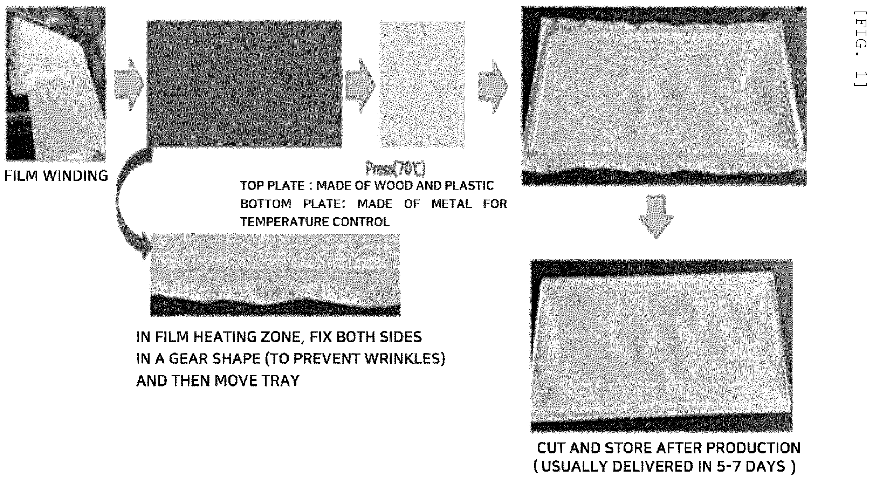

FIG. 1 includes diagrams confirming the results of a post-molding shrinkage prevention ability test of a molded article manufactured according to the present invention.

### [Best Mode]

The present invention is described in more detail below.

For example, in the present invention, the halogen may be at least one of fluorine (F), chlorine (Cl), bromine (Br), and iodine (I), preferably at least one of chlorine and bromine, more preferably bromine.

The thermoplastic flame-retardant resin composition according to the present invention consists of two or more different polyolefin-based resins, a post-molding shrinkage inhibitor, a halogen-based flame retardant, and a flame retardant aid.

The present inventors confirmed that, when a thermoplastic flame-retardant resin composition of the present invention was prepared, when two or more different polyolefin-based resins were subjected to a predetermined molding process and mixed with appropriate amounts of a shrinkage inhibitor, a halogen-based flame retardant, and a flame retardant aid, the problem of post-molding shrinkage for a large-area molded article having a very thin thickness of 0.3 mm or less was solved without reducing flame retardancy developed by the flame retardant and flame retardant aid included in the thermoplastic flame-retardant resin composition. In addition, the required physical properties and the reliability of the molded article were provided. Based on these results, the present inventors conducted further studies to complete the present invention.

Below, each component that constitutes the thermoplastic flame-retardant resin composition is described in more detail.

### Resins represented by Chemical Formula 1

The resins represented by Chemical Formula 1 according to the present invention may have the following structure.

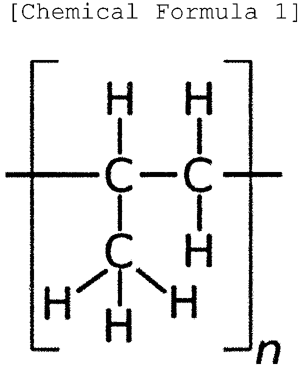

In Chemical Formula 1, n is an integer between 1000 and 6000.

The resins represented by Chemical Formula 1 may provide excellent flame retardancy without increasing specific gravity when provided as a flame retardancy resin composition.

The resins represented by Chemical Formula 1 may be prepared by a method commonly used in the technical field to which the present invention belongs, or a commercially available product may be used, within the scope that complies with the definition of the present invention, without particular limitation.

For example, the resins represented by Chemical Formula 1 may include one or more selected from a first resin in which n is an integer between 1000 and 3000 and a second resin in which n is an integer between 3000 to 6000.

For example, the first resin may have a melt index of 5 to 50 g/10 min, preferably 5 to 30 g/10 min, more preferably 5 to 20 g/10 min as measured at 230 °C under a load of 2.16 kg in ISO1133 standard. In this case, the effect of suppressing a strong pressure increase that may occur during extrusion processing may be provided by providing appropriate flowability.

For example, based on 100 % by weight in total of the thermoplastic flame-retardant resin composition including the first resin, the first resin may be included in an amount of 19 % by weight or more, as a specific example, 19 to 29 % by weight, more preferably 20 to 28 % by weight. In this case, the effect of suppressing a strong pressure increase that may occur during extrusion processing may be provided by providing appropriate flowability.

The first resin may be prepared by a method commonly used in the technical field to which the present invention belongs, or a commercially available product may be used, within the scope that complies with the definition of the present invention, without particular limitation.

For example, the second resin may have a melt index of 0.01 to 4 g/10 min, preferably 0.01 to 3 g/10 min, more preferably 0.1 to 3 g/10 min as measured at 230 °C under a load of 2.16 kg in ISO1133 standard. In this case, a sheet may be produced by extrusion.

For example, based on 100 % by weight in total of the thermoplastic flame-retardant resin composition including the second resin, the second resin may be included in an amount of 50 % by weight or less, as a specific example, 40 to 50 % by weight, more preferably 42 to 48 % by weight. In this case, a sheet may be produced by extrusion.

The second resin may be prepared by a method commonly used in the technical field to which the present invention belongs, or a commercially available product may be used, within the scope that complies with the definition of the present invention, without particular limitation.

For example, based on 100 % by weight in total of the thermoplastic flame-retardant resin composition including the first resin in which n is an integer between 1000 and 3000 and the second resin in which n is an integer between 3000 to 6000, the total amount of the first and second resins may be 50 % by weight or more, as a specific example, 55 to 74 % by weight, more preferably 60 to 74 % by weight. In this case, appropriate insulation performance and chemical resistance may be provided.

As a specific example, the first resin in which n is an integer between 1000 and 3000 and the second resin in which n is an integer between 3000 to 6000 may be included in a weight ratio of 1:1 to 1:3.8 (first:second), as a preferred example, 1:1 to 1:3.4 (first:second), as a more preferred example, 1:1 to 1:3 (first:second). In this case, the most appropriate flowability and viscosity may be provided for producing sheets of 0.5 mm or less through continuous extrusion processing.

### Resin represented by Chemical Formula 2

The resin represented by Chemical Formula 2 according to the present invention may have the following structure.

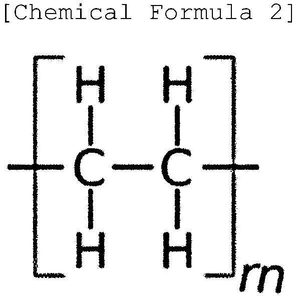

In Chemical Formula 2, m is an integer between 2000 and 8000.

The resin represented by Chemical Formula 2 may further increase the shrinkage prevention effect by assisting the shrinkage prevention agent represented by Chemical Formula 3 described below without increasing the specific gravity of the flame retardancy resin composition implemented by the above-described resins represented by Chemical Formula 1 and adversely affecting the flame retardancy thereof.

For example, the resin represented by Chemical Formula 2 may have a melt index of 0.1 to 20 g/10 min, preferably 0.1 to 10 g/10 min, more preferably 0.1 to 5 g/10 min as measured at 190 °C under a load of 2.16 kg in ISO1133 standard. In this case, the shrinkage prevention effect may be further increased by assisting a shrinkage inhibitor represented by Chemical Formula 3 described below.

For example, the resin represented by Chemical Formula 2 may have an impact strength of 2 to 20 kJ/m², preferably 4 to 15 kJ/m², more preferably 4 to 10 kJ/m² as measured at 23 °C under a notched condition in ISO180 standard. In this case, the impact strength and rigidity of the thermoplastic flame-retardant resin composition may be improved.

For example, based on 100 % by weight in total of the thermoplastic flame-retardant resin composition including the resin represented by Chemical Formula 2, the resin represented by Chemical Formula 2 may be included in an amount of 14 % by weight or less, as a specific example, 6 to 14 % by weight, more preferably 6 to 12 % by weight. In this case, impact strength or rigidity may be provided without increasing the specific gravity of the flame retardancy resin composition and adversely affecting the flame retardancy thereof.

The resin represented by Chemical Formula 2 may be prepared by a method commonly used in the technical field to which the present invention belongs, or a commercially available product may be used, within the scope that complies with the definition of the present invention, without particular limitation.

In this description, n and m may be calculated by dividing the number average molecular weight by the molar mass of each unit, and the number average molecular weight may be measured as a relative value to a standard polystyrene sample through gel chromatography (GPC), but is not limited thereto.

### Post-molding shrinkage inhibitor

As the post-molding shrinkage inhibitor according to the present invention, the compound represented by Chemical Formula 3 may be used.

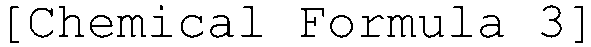

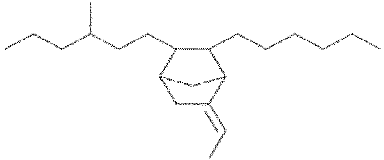

The compound represented by Chemical Formula 3 includes a propylene fraction, an ethylene fraction, and a cross-linking fraction, thereby improving the compatibility between the above-described resins represented by Chemical Formula 1, the resin represented by Chemical Formula 2, and the flame retardant and flame retardant aid described below, thereby providing an effect of improving the post-molding shrinkage prevention ability even when being molded into a large area with a very thin thickness of 0.3 mm or less.

In Chemical Formula 3, carbon (C) symbols and carbon-hydrogen bond symbols are omitted.

For example, based on 100 % by weight in total of the thermoplastic flame-retardant resin composition including the resin represented by Chemical Formula 3, the resin represented by Chemical Formula 3 may be included in an amount of 14 % by weight or less, as a specific example, 6 to 14 % by weight, more preferably 6 to 12 % by weight. In this case, by simultaneously including propylene fraction, ethylene fraction, and cross-linking fraction, the compatibility between the above-described resins represented by Chemical Formula 1, the resin represented by Chemical Formula 2, and the flame retardant and flame retardant aid to be described later may be improved, thereby providing an effect of improving the post-molding shrinkage prevention ability even when being molded into a large area with a very thin thickness of 0.3 mm or less.

The resin represented by Chemical Formula 3 may be prepared by a method commonly used in the technical field to which the present invention belongs, or a commercially available product may be used, within the scope that complies with the definition of the present invention, without particular limitation.

### Halogen-based flame retardant

The halogen-based flame retardant according to the present invention has better thermal stability than a nonhalogen-based flame retardant.

For example, the halogen-based flame retardant may be a bromine-based flame retardant. In this case, the effect of suppressing combustion may be provided by suppressing the spread of sparks following ignition.

As a specific example, the bromine-based flame retardant may include one or more selected from tetrabromobisphenol A, decabromodiphenyloxide, octabromo-1,3,3-trimethyl-1-phenylindane, tetrabromobisphenol A-bis(2,3-dibromopropyl ether), and 2,4,6-tris(2,4,6-tribromophenoxy)-1,3,5-triazine.

For example, based on 100 % by weight in total of the thermoplastic flame-retardant resin composition including the halogen-based flame retardant, the halogen-based flame retardant may be included in an amount of 11 % by weight or less, as a specific example, 6.5 to 11 % by weight, more preferably 6.5 to 10 % by weight. In this case, excellent flame retardancy and fluidity may be imparted to a thermoplastic flame-retardant resin composition without deterioration of other properties.

The halogen-based flame retardant may be prepared by a method commonly used in the technical field to which the present invention belongs, or a commercially available product may be used, within the scope that complies with the definition of the present invention, without particular limitation.

### Flame retardant aid

The flame retardant aid according to the present invention has the advantage of increasing the flame retardancy provided by the above-described flame retardant without deterioration of other properties.

For example, the flame retardant aid may be an antimony-based compound. In this case, an auxiliary effect that further increases the flame retardant effect may be provided.

As a specific example, the flame retardant aid may include one or more selected from antimony trioxide, polysiloxane compounds, biotite, muscovite, iron oxide, tungsten oxide, and calcium carbonate, preferably antimony trioxide.

For example, based on 100 % by weight in total of the thermoplastic flame-retardant resin composition including the flame retardant aid, the flame retardant aid may be included in an amount of 4 % by weight or less, as a specific example, 1 to 4 % by weight, more preferably 2 to 4 % by weight. In this case, excellent flame retardancy and fluidity may be imparted to a thermoplastic flame-retardant resin composition without deterioration of other properties.

The flame retardant aid may be prepared by a method commonly used in the technical field to which the present invention belongs, or a commercially available product may be used, within the scope that complies with the definition of the present invention, without particular limitation.

### Thermoplastic flame-retardant resin composition

For example, the thermoplastic flame-retardant resin composition according to the present invention may include the resin represented by Chemical Formula 2 and the post-molding shrinkage inhibitor represented by Chemical Formula 3 in a weight ratio of 1:0.5 to 1:1.5 (Equation 2:Equation 3), as a specific example, 1:0.8 to 1:1.3(Equation 2:Equation 3). In this case, the tendency to shrink after molding may be effectively suppressed, and economic efficiency may be improved.

The thermoplastic flame-retardant resin composition may include one or more other additives selected from the group consisting of an activator, a light stabilizer, and a release agent, within a range that does not affect appearance properties.

For example, based on 100 parts by weight of the thermoplastic flame-retardant resin composition, the other additives may be included in an amount of 0.1 to 10 parts by weight, preferably 0.1 to 5 parts by weight, more preferably 0.5 to 2 parts by weight. Within this range, the functions of other additives may be implemented without deteriorating the intrinsic properties of the thermoplastic flame-retardant resin composition of the present invention.

For example, the lubricant may include one or more selected from ethylene bissteramide, polyethylene oxide wax, magnesium stearate, calcium stearamide, and stearic acid, without being limited thereto.

For example, as the light stabilizer, a HALS-based light stabilizer, a benzophenone-based light stabilizer, or a benzotriazole-based light stabilizer may be used, without being limited thereto.

For example, the release agent may be selected from glycerin monostearate, glycerin tristearate, and polyethylene tetrastearate, without being limited thereto.

In addition, the thermoplastic flame-retardant resin composition according to the present invention includes 19 to 29 % by weight of a first resin represented by Chemical Formula 1 below in which n is an integer between 1000 and 3000, wherein the first resin has a melt index of 5 to 50 g/10 min as measured at 230 °C under a load of 2.16 kg in ISO1133 standard; 40 to 50 % by weight of a second resin represented by Chemical Formula 1 below in which n is an integer between 3000 and 6000, wherein the second resin has a melt index of 0.01 to 4 g/10 min as measured at 230 °C under a load of 2.16 kg in ISO1133 standard; 6 to 14 % by weight of a resin represented by Chemical Formula 2 below in which m is an integer between 2000 and 8000; 6 to 14 % by weight of a post-molding shrinkage inhibitor represented by Chemical Formula 3 below; 6.5 to 11 % by weight of a bromine-based flame retardant; and 1 to 4 % by weight of an antimony-based flame retardant aid, wherein the resin represented by Chemical Formula 2 and the resins represented by Chemical Formula 1 are included in a weight ratio (Equation 2:Equation 1) of 1:6 to 1:7.4.

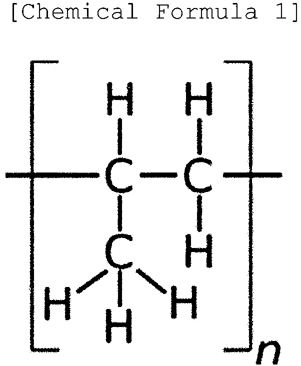

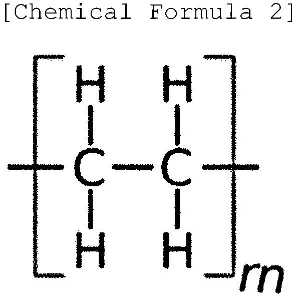

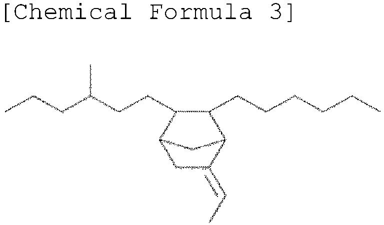

In Chemical Formulas 1 and 2, n is an integer between 1000 and 6000, and m is an integer between 2000 and 8000. In Chemical Formula 3, carbon (C) symbols and carbon-hydrogen bond symbols are omitted

The thermoplastic flame-retardant resin composition exhibits flame retardancy of grade V-0 in the vertical combustion test of UL94, and has excellent post-molding shrinkage prevention ability and processability. Thus, the thermoplastic flame-retardant resin composition may be suitable for a large-area lightweight molded article having very thin thickness that requires such performance.

A method of preparing the thermoplastic flame-retardant resin composition will be described. In describing the method of preparing the thermoplastic flame-retardant resin composition of the present invention, all contents of the thermoplastic flame-retardant resin composition described above are included.

For example, the method of preparing the thermoplastic flame-retardant resin composition of the present invention includes a step of feeding resins represented by Chemical Formula 1 below; a resin represented by Chemical Formula 2 below; a post-molding shrinkage inhibitor represented by Chemical Formula 3 below; a halogen-based flame retardant; and a flame retardant aid into a twin-screw extruder and performing melt-kneading and extrusion.

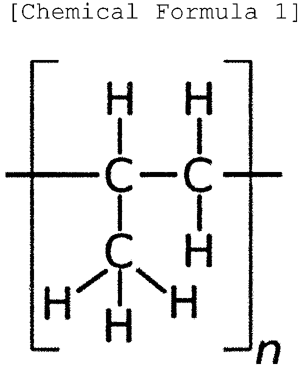

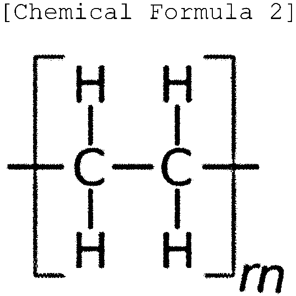

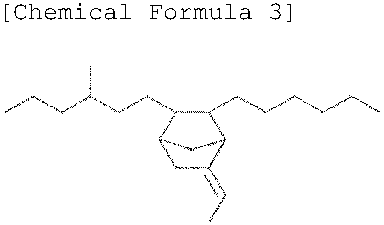

In Chemical Formulas 1 and 2, n is an integer between 1000 and 6000, and m is an integer between 2000 and 8000. In Chemical Formula 3, carbon (C) symbols and carbon-hydrogen bond symbols are omitted.

The resin represented by Chemical Formula 2 and the resins represented by Chemical Formula 1 may be included in a weight ratio (Equation 2:Equation 1) of 1:6 to 1:7.4.

For example, in the melt-kneading step, other additives described above may be included.

For example, the melt-kneading and extrusion step may be performed using one or more selected from a singlescrew extruder, a twin-screw extruder, and a Banbury mixer, preferably a twin-screw extruder. The melt-kneading and extrusion step may be performed by uniformly mixing a composition using a twin-screw extruder and performing extrusion to obtain a thermoplastic flame-retardant resin composition in the form of pellets. In this case, product reliability, flame retardancy, and post-molding shrinkage prevention ability may be improved, and thus appearance quality may be superior.

For example, the kneading and extrusion may be performed at a barrel temperature of 250 to 310 °C, preferably 260 to 300 °C, more preferably 270 to 290 °C, still more preferably 250 to 280 °C. In this case, throughput per unit time may be increased, and melt-kneading may be sufficiently performed. In addition, thermal decomposition of the resin component may be prevented.

For example, the kneading and extrusion may be performed at a screw rotation speed of 100 to 600 rpm, preferably 150 to 400 rpm, more preferably 100 to 350 rpm, still more preferably 150 to 320 rpm, still more preferably 200 to 310 rpm. Within this range, throughput per unit time may be increased, and process efficiency may be improved. In addition, excessive cutting of inorganic filler may be prevented, so that the rigidity of the final product may be further improved.

The thermoplastic flame-retardant resin composition obtained by the kneading and extrusion may preferably be provided in the form of pellets.

The type of extruder is not particularly limited, and an extruder commonly used in the art may be appropriately selected and used. For example, a singlescrew extruder equipped with one screw or a multi-screw extruder equipped with a plurality of screws may be used. Considering uniform kneading of materials, ease of processing, and economic efficiency, a twin-screw extruder equipped with two screws is preferably used.

The extruder includes a raw material feeder for feeding materials into a barrel, a screw for conveying and kneading the fed materials, and a die for extruding the kneaded materials. In this case, the screw consists of a plurality of screw elements for various functions.

One or more feeders may be provided. Optionally, two or more feeders may be provided. For example, a main feeder and optionally an auxiliary feeder may be provided. Optionally, more than two auxiliary feeders may be provided.

The kneading blocks of the present invention correspond to the screw elements. Specifically, each kneading block consists of a plurality of discs, preferably 3 to 7 discs, 5 to 7 discs, 3 to 5 discs, or 4 to 5 discs, and has a polygonal cross-section or an elliptical cross-section. The kneading blocks are arranged continuously in a direction in which materials are conveyed. In addition, in the kneading block, the phase angle of the discs (indicating the travel angle between discs) is preferably 45 to 90°.

In addition, the kneading block includes a forward kneading block capable of conveying, distributing, and mixing materials, a neutral kneading block capable of distributing and mixing materials without conveying the same, and a backward kneading block capable of conveying materials in a direction opposite to the conveying direction.

### Molded article

For example, a molded article of the present invention includes the thermoplastic flame-retardant resin composition of the present invention. In this case, compared to conventional thermoplastic flame-retardant resin compositions, the physical property balance between post-molding shrinkage prevention ability, processability, and flame retardancy may be achieved even when molding a large area with a very thin thickness of less than 0.3 mm.

For example, the molded article of the present invention may be manufactured by molding the thermoplastic flame-retardant resin composition of the present invention. In describing the molded article including the thermoplastic flame-retardant resin composition of the present invention, all contents of the thermoplastic flame-retardant resin composition described above are included.

The method of manufacturing the molded article of the present invention includes a step of injection-molding or sheet-molding an extruded product manufactured by the method of preparing a thermoplastic flame-retardant resin composition. In this case, a molded article having post-shrinkage prevention ability, processability, and flame retardancy may be easily manufactured even when molding a large area with a very thin thickness of 0.3 mm or less.

In the injection or sheet molding, the injection temperature (cylinder temperature) or sheet molding temperature may be preferably 200 to 300 °C, more preferably 200 to 290 °C. Within this range, large-area injection molded products or sheets with a very thin thickness of 0.3 mm or less may be easily manufactured.

The injection or sheet forming speed may be preferably 10 to 100 mm/s, more preferably 10 to 80 mm/s, still more preferably 20 to 80 mm/s. Within this range, large-area injection molded products or sheets with a very thin thickness of 0.3 mm or less may be easily manufactured.

In the injection or sheet molding, pressure may be preferably 10 to 150 bar, more preferably 20 to 90 bar, still more preferably 40 to 80 bar. Within this range, large-area injection molded products or sheets with a very thin thickness of 0.3 mm or less may be easily manufactured.

In the injection or sheet molding, holding pressure may be preferably 10 to 100 bar, more preferably 20 to 80 bar, more preferably 30 to 60 bar. Within this range, large-area injection molded products or sheets with a very thin thickness of 0.3 mm or less may be easily manufactured.

The molded article may be a product that requires post-shrinkage prevention ability, processability, and flame retardancy even when molded in a large area with a very thin thickness of 0.3 mm or less.

The molded article may be an automotive or electrical/electronic part.

For example, the molded article may be an energy storage system component.

For example, the molded article may be a large-area sheet having a thickness of 0.3 mm or less.

The molded article of the present invention may exhibit flame retardancy of grade V-0 in the vertical combustion test of UL94.

The molded article of the present invention has excellent post-molding shrinkage prevention ability, so that post-molding shrinkage may be prevented even after being stored at room temperature for 5 to 7 days after being molded into a large-area sheet with a very thin thickness of 0.3 mm or less.

In describing the thermoplastic flame-retardant resin composition of the present invention, the method of preparing the same, and the molded article, it should be noted that other conditions or equipment not explicitly described herein may be appropriately selected within the range commonly practiced in the art without particular limitation.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

The components used in Examples and Comparative Examples are as follows.
*Resin represented by Chemical Formula 1
   - First resin: BX3500 (SK Co.) having a melt index of 10 g/10 min as measured at 230 °C under a load of 2.16 kg in ISO1133 standard
   - Second resin: EP332C (POLYMIRAE Co.) having a melt index of 0.35 g/10 min as measured at 230 °C under a load of 2.16 kg in ISO1133 standard
*Resin represented by Chemical Formula 2: ME1000 (LG Chem. Co.) having an impact strength of 8 as measured at 23 °C under a notched condition in ISO180 standard
*Resin represented by Chemical Formula 3: KEP-070P (KUMHO POLYCHEM Co.) having a Mooney viscosity of 69 MU as measured under the condition of ML(1+4)@100 °C in ASTM D1646 standard
*Bromine-based flame retardant: SR-743N (DAI-ICHI FR Co.)

### Examples 1 to 3, and Comparative Examples 1 to 12

According to the contents shown in Tables 2 and 3, the components shown in Tables 2 and 3 were fed into a twin-screw extruder (SM Co., T40) and were melt-kneaded and extruded at a temperature of 200 to 250 °C and a rotation rate of 250 rpm to obtain pellets. Using the pellets, a square test specimen having a size of 60 mm × 60 mm × 2 mm was manufactured using an injection molding machine (Engel, 80 tons).

The twin-screw extruder has two or more inlets, and all ingredients were fed into the main inlet.

### [Test Examples]

The properties of the specimens manufactured in Examples 1 to 3 and Comparative Examples 1 to 12 were measured by the following methods, and the results are shown in Table 2, Table 3 and FIG. 1 below.
* Flame retardancy (for 0.2 mm thick specimen): Flame retardancy was evaluated for 1/12-inch thick specimens according to the UL94 measurement method (1.5 mm vertical) with reference to items 1 and 2 below and Table 1.
1. The specimen was rolled onto a 13 mm-diameter rod (mandrel), the upper part thereof was taped, and the specimen was fixed using a clamp.
2. The burner and test method evaluated the combustion pattern of the product and the extent of flame spread to the surroundings after spark contact was performed twice on the specimen for 3 seconds each.

**[Table 1]**

| Classification | VTM-0 | VTM-1 | VTM-2 |
|---|---|---|---|
| Individual combustion times (t1 or t2 of individual specimens) | 10 seconds or less | 30 seconds or less | 30 seconds or less |
| Total combustion time of 5 specimens (sum of t1 and t2 of 5 specimens) | 50 seconds or less | 250 seconds or less | 250 seconds or less |
| Combustion and spark formation time after secondary spark contact (sum of t2 and t3 of individual specimens) | 30 seconds or less | 60 seconds or less | 60 seconds or less |
| Combustion up to clamp (125 mm mark) | None | None | None |
| Ignition of cotton wool by loading | None | None | Yes |

* Post-molding shrinkage prevention ability (Dimensional deformation amount): Using a 0.2 mm-thick specimen, the difference between the size measured immediately after molding and the size measured after 5 to 7 days of storage at room temperature after molding was expressed as a percentage (%).
* Melt flow index: measured at 230 °C under a load of 10.0 kg in ISO1133 standard.
* Specific gravity: measured at 23 °C in ISO1183 standard.

**[Table 2]**

| Classification (wt%) | Example 1 | Example 2 | Example 3 |
|---|---|---|---|
| First resin | 24 | 29 | 19 |
| Second resin | 45 | 40 | 50 |
| Resin represented by Chemical Formula 2 | 10 | 10 | 10 |
| Shrinkage inhibitor after molding | 10 | 10 | 10 |
| Bromine-based flame retardant | 8 | 8 | 8 |
| Flame retardant aid | 3 | 3 | 3 |
| Flame retardancy (0.2 mm thickness) | VTM-0 | VTM-0 | VTM-0 |
| Post-molding shrinkage prevention ability (Dimensional deformation %) | 2.1 | 1.5 | 2.2 |
| Melt flow index (g/10 min) | 30 | 33 | 24 |
| Specific gravity (g/ml) | 0.96 | 0.96 | 0.96 |

**[Table 3]**

| Classi ficati on (wt%) | Compa rativ e Examp le 1 | Compa rativ e Examp le 2 | Compa rativ e Examp le 3 | Compa rativ e Examp le 4 | Compa rativ e Examp le 5 | Compa rativ e Examp le 6 | Compa rativ e Examp le 7 | Compa rativ e Examp le 8 | Compa rativ e Examp le 9 | Compa rativ e Examp le 10 | Compa rativ e Examp le 11 | Compa rativ e Examp le 12 |
|---|---|---|---|---|---|---|---|---|---|---|---|---|
| First resin | 30 | 27 | 24 | 27 | 24 | 27 | 24 | 21 | 69 | - | 45 | 5 |
| Second resin | 70 | 67 | 56 | 63 | 56 | 63 | 56 | 49 | - | 69 | 24 | 5 |
| Resin repres ented by Chemic al Formul a 2 | - | - | - | - | - | 10 | 10 | 20 | 10 | 10 | 10 | 69 |
| Shrink age inhibi tor after moldin g | - | - | - | 10 | 20 | - | 10 | 10 | 10 | 10 | 10 | 10 |
| Bromin e-based flame retard ant | - | 4 | 15 | - | - | - | - | - | 8 | 8 | 8 | 8 |
| Flame retard ant aid | - | 2 | 5 | - | - | - | - | - | 3 | 3 | 3 | 3 |
| Flame retard ancy (0.2 mm thickn ess) | Immea surab le | Immea surab le | VTM-0 | Immea surab le | Immea surab le | Immea surab le | Immea surab le | Immea surab le | VTM-0 | VTM-0 | VTM-0 | VTM-0 |
| Post-moldin g shrink age prevention abilit y (Dimen sional deform ation %) %) | 7.3 | 7.3 | 7.4 | 2.9 | 3.0 | 7.3 | 2.1 | 2.1 | 2.1 | 2.3 | 2.3 | 26.0 |
| Melt flow index (g/10 min) | 35 | 35 | 35 | 30 | 25 | 35 | 30 | 30 | 130 | 15 | 60 | 25 |
| Specif ic gravit y (g/ml) | 0.89 | 0.92 | 1.05 | 0.89 | 0.89 | 0.90 | 0.90 | 0.91 | 0.96 | 0.96 | 0.95 | 1.00 |

As shown in Tables 2 and 3, in the case of the thermoplastic flame-retardant resin compositions according to the present invention (Examples 1 to 3), compared to the thermoplastic flame-retardant resin compositions (Comparative Examples 1 to 12) outside the range of the present invention, even when manufacturing molded articles with a very thin thickness of 0.2 mm, the physical property balance was excellent among the measured items including flame retardancy, post-molding shrinkage prevention ability, melt flow index, and specific gravity.

In particular, as shown in FIG. 1, in the case of Example 1 according to the present invention, it was confirmed that excellent post-molding shrinkage prevention ability was effectively implemented.

In contrast, in the case of Comparative Example 1 in which only two types of resins represented by Chemical Formula 1 were used, or Comparative Example 2 in which the flame retardant and the flame retardant aid were added to the composition of Comparative Example 1, compared to Example 1, flame retardancy was poor, and post-molding shrinkage occurred.

In addition, in the case of Comparative Example 3 in which two types of resins represented by Chemical Formula 1 were used and an excess of the flame retardant and flame retardant aid was added, flame retardancy was secured. However, compared to Example 1, post-molding shrinkage occurred, and the specific gravity exceeded 1 g/ml, failing to achieve lightweight.

In addition, in the case of Comparative Example 4 in which the resin represented by Chemical Formula 2, the flame retardant, and the flame retardant aid were not added, compared to Example 1, post-molding shrinkage was prevented, but flame retardancy was not secured.

In addition, in the case of Comparative Example 5 in which two types of resins represented by Chemical Formula 1 were used and an excess of the post-molding shrinkage inhibitor was added, similar processability as Example 1 was achieved, but flame retardancy was poor.

In addition, in the case of Comparative Example 6 in which the post-molding shrinkage inhibitor, the flame retardant, and the flame retardant aid were not added, compared to Example 1, flame retardancy was poor, and post-molding shrinkage was not prevented.

In addition, in the case of Comparative Example 7 in which the flame retardant and the flame retardant aid were not added, compared to Example 1, flame retardancy was poor.

In addition, in the case of Comparative Example 8 in which two types of resins represented by Chemical Formula 1 were used and an excess of the resin represented by Chemical Formula 2 was used, compared to Example 1, flame retardancy was poor.

In addition, in the case of Comparative Example 9 in which, among the resins represented by Chemical Formula 1, the first resin was used alone and the second resin was not used, even when the resin represented by Chemical Formula 2, the post-molding shrinkage inhibitor, the flame retardant, and the flame retardant aid were added in appropriate amounts, compared to Example 1, processability for extrusion molding was poor due to too low viscosity.

In addition, in the case of Comparative Example 10 in which, among the resins represented by Chemical Formula 1, the second resin was used alone and the first resin was not used, even when the resin represented by Chemical Formula 2, the post-molding shrinkage inhibitor, the flame retardant, and the flame retardant aid were added in appropriate amounts, compared to Example 1, processability for extrusion molding was poor due to too high viscosity.

In addition, in the case of Comparative Example 11 in which, among the resins represented by Chemical Formula 1, the first resin and the second resin were used in a mixing ratio outside the appropriate range, even when the resin represented by Chemical Formula 2, the post-molding shrinkage inhibitor, the flame retardant, and the flame retardant aid were added in appropriate amounts, compared to Example 1, processability for extrusion molding was poor due to too low viscosity.

In addition, in the case of Comparative Example 12 in which, among the resins represented by Chemical Formula 1, the first resin and the second resin were used in a mixing ratio outside the appropriate range, and an excess of the resin represented by Chemical Formula 2 was added, even when the post-molding shrinkage inhibitor, the flame retardant, and the flame retardant aid were added in appropriate amounts, compared to Example 1, post-molding shrinkage prevention ability was poor, and the specific gravity was 1.0 or more, failing to achieve lightweight.

In conclusion, when the thermoplastic flame-retardant resin composition of the present invention is prepared, when two or more different polyolefin-based resins are subjected to a predetermined molding process and mixed with appropriate amounts of a shrinkage inhibitor, a halogen-based flame retardant, and a flame retardant aid, the problem of post-molding shrinkage for a large-area molded article having a very thin thickness of 0.3 mm or less may be solved without reducing flame retardancy developed by the flame retardant and flame retardant aid included in the thermoplastic flame-retardant resin composition. In addition, the reliability of the molded article may be improved, and flame retardancy of grade V-0 may be achieved in the vertical combustion test of UL94. Accordingly, the molded article of the present invention may be suitable for electrical and electronic products and automobile parts, such as insulating sheets for energy storage systems, which require such performance.

## Claims

1. A thermoplastic flame-retardant resin composition comprising resins represented by Chemical Formula 1 below; a resin represented by Chemical Formula 2 below; a post-molding shrinkage inhibitor represented by Chemical Formula 3 below; a halogen-based flame retardant; and a flame retardant aid,
wherein the resin represented by Chemical Formula 2 and the resins represented by Chemical Formula 1 are comprised in a weight ratio of 1:6 to 1:7.4, and
the resins represented by Chemical Formula 1 comprise a first resin in which n is an integer between 1000 and 3000 and a second resin in which n is an integer between 3000 and 6000 in a weight ratio of 1:1 to 1:3.8. 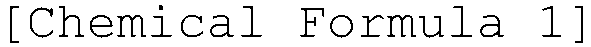 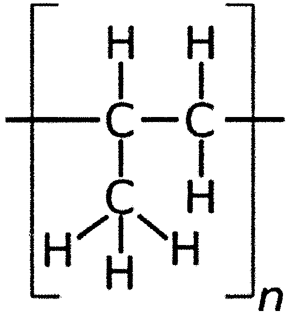 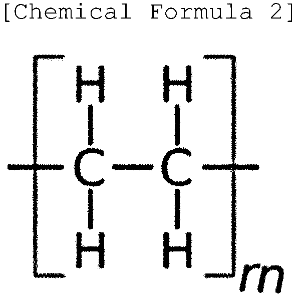 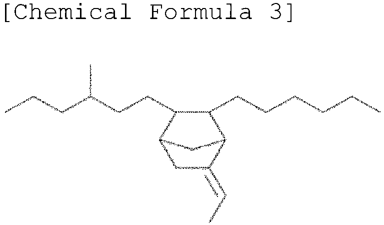
wherein, in Chemical Formulas 1 and 2, n is an integer between 1000 and 6000, and m is an integer between 2000 and 8000; and, in Chemical Formula 3, carbon (C) symbols and carbon-hydrogen bond symbols are omitted.

2. The thermoplastic flame-retardant resin composition according to claim 1, wherein the first resin has a melt index of 5 to 50 g/10 min as measured at 230 °C under a load of 2.16 kg in IS01133 standard, and the second resin has a melt index of 0.01 to 4 g/10 min as measured at 230 °C under a load of 2.16 kg in IS01133 standard.

3. The thermoplastic flame-retardant resin composition according to claim 1, wherein the resin represented by Chemical Formula 2 and the post-molding shrinkage inhibitor represented by Chemical Formula 3 are comprised in a weight ratio of 1:0.5 to 1:1.5.

4. The thermoplastic flame-retardant resin composition according to claim 1, wherein the halogen-based flame retardant is a bromine-based flame retardant.

5. The thermoplastic flame-retardant resin composition according to claim 4, wherein the bromine-based flame retardant comprise one or more selected from tetrabromobisphenol A, decabromodiphenyloxide, octabromo-1,3,3-trimethyl-1-phenylindane, tetrabromobisphenol A-bis(2,3-dibromopropyl ether), and 2,4,6-tris(2,4,6-tribromophenoxy)-1,3,5-triazine.

6. The thermoplastic flame-retardant resin composition according to claim 1, wherein the flame retardant aid is an antimony-based compound.

7. The thermoplastic flame-retardant resin composition according to claim 6, wherein the antimony-based compound comprises one or more selected from antimony trioxide, polysiloxane compounds, biotite, muscovite, iron oxide, tungsten oxide, and calcium carbonate.

8. A thermoplastic flame-retardant resin composition, comprising:
19 to 29 % by weight of a first resin represented by Chemical Formula 1 below in which n is an integer between 1000 and 3000, wherein the first resin has a melt index of 5 to 50 g/10 min as measured at 230 °C under a load of 2.16 kg in IS01133 standard;
40 to 50 % by weight of a second resin represented by Chemical Formula 1 below in which n is an integer between 3000 and 6000, wherein the second resin has a melt index of 0.01 to 4 g/10 min as measured at 230 °C under a load of 2.16 kg in IS01133 standard;
6 to 14 % by weight of a resin represented by Chemical Formula 2 below in which m is an integer between 2000 and 8000;
6 to 14 % by weight of a post-molding shrinkage inhibitor represented by Chemical Formula 3 below;
6.5 to 11 % by weight of a bromine-based flame retardant; and
1 to 4 % by weight of an antimony-based flame retardant aid,
wherein the resin represented by Chemical Formula 2 and the resins represented by Chemical Formula 1 are comprised in a weight ratio of 1:6 to 1:7.4. 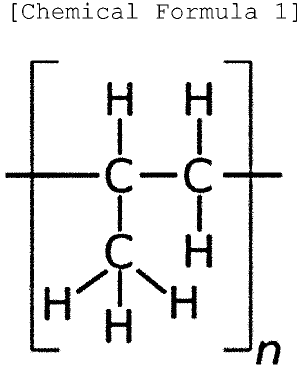 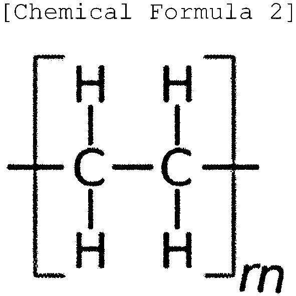 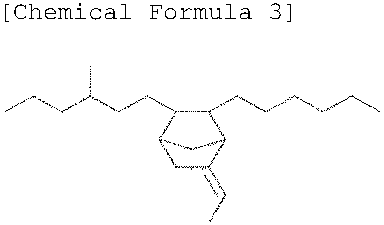
wherein, in Chemical Formulas 1 and 2, n is an integer between 1000 and 6000, and m is an integer between 2000 and 8000; and, in Chemical Formula 3, carbon (C) symbols and carbon-hydrogen bond symbols are omitted.

9. A molded article manufactured by molding the thermoplastic flame-retardant resin composition according to claim 1 or 8.

10. The molded article according to claim 9, wherein the molded article is an energy storage system component or a sheet having a thickness of 0.3 mm or less.
